# EUROPÄISCHE PATENTSCHRIFT

(11) **EP 2 638 205 B1**
(45) Veröffentlichungstag und Bekanntmachung des Hinweises auf die Patenterteilung: **05.08.2015**
(21) Anmeldenummer: 11773732.0
(22) Anmeldetag: 25.10.2011
(51) Int. Cl.: D21B 1/32, D21B 1/34

(54) **ZOPFWINDENSTEUERUNG**
ROPE WINCH CONTROL
COMMANDE DE TIRE-TORON

(30) Priorität: 09.11.2010 DE 102010043603
(43) Veröffentlichungstag der Anmeldung: 18.09.2013
(73) Patentinhaber: Voith Patent GmbH, 89520 Heidenheim (DE)
(72) Erfinder: MÜLLER, Wolfgang, 88250 Weingarten (DE)
(86) Internationale Anmeldenummer: PCT/EP2011/068585
(87) Internationale Veröffentlichungsnummer: WO 2012/062563

(56) Entgegenhaltungen:
- WO-A1-2010/026295
- US-A- 3 844 488
- DATABASE WPI Section Ch, Week 200903 Thomson Scientific, London, GB; Class F09, AN 2009-A67454 XP002663913, -& KR 2008 0067998 A ((MYOUNG SHIN IND MACHINE CO LTD) 22. Juli 2008 (2008-07-22)

## Beschreibung

Die Erfindung betrifft ein Verfahren zur Steuerung einer Zopfwinde, welche einen von Verunreinigungen gebildeten Zopf aus einem Stofflöser zur Auflösung von mit Verunreinigungen versetzten Faserstoffen fördert und von wenigstens zwei gegeneinander gedrückten Rollen gebildet wird, durch deren Pressspalt der Zopf läuft.

Stofflöser dienen der Auflösung von überwiegend lufttrockenem Fasermaterial, welches im Stofflöser mit Wasser intensiv vermischt wird, wozu meist ein Misch- und Zerkleinerungsrotor eingesetzt wird.
Im Wesentlichen werden Stofflöser daher von einem Behälter für die Suspension und dem Rotor gebildet.

Insbesondere wenn das Fasermaterial zumindest teilweise von Altpapier gebildet wird, sammeln sich im Stofflöser auch Verunreinigungen, die zusammen mit spinnenden Verunreinigungen wie Drähten oder Bändern in Form eines Zopfes über eine Zopfwinde aus dem Stofflöser entfernt werden.

Derartige Anlagen werden beispielsweise in der WO 2010/026295A1 sowie der KR 2008 0067998 beschrieben.

Dabei variiert der Zopf oft hinsichtlich Zusammensetzung und Durchmesser relativ stark über seine Länge, was zu Störungen an der Zopfwinde, insbesondere einem Klemmen führen kann.
Eine dadurch erzwungene Abweichung der Bewegungsgeschwindigkeit des Zopfes von einem Sollwert, insbesondere ein Stillstand hat so die Bildung einer weiteren Verdickung des Zopfes in der Suspension zur Folge.
Dies bedeutet, dass eine Störung an der Zopfwinde, sofern sie nicht schnell behoben wird, gleich die Basis für eine folgende Störung bildet.

Die Aufgabe der Erfindung ist es daher die Zopfwinde so zu steuern, dass Störungen möglichst vermieden oder zumindest zeitlich verkürzt werden.

Erfindungsgemäß wurde die Aufgabe dadurch gelöst, dass die Anpresskraft der Rollen in Abhängigkeit von der Bewegung des Zopfes gesteuert wird.
Die Bewegungsgeschwindigkeit und/oder die Bewegungsrichtung des Zopfes sind ein sicherer und einfach zu erfassender Parameter zur Ermittlung einer Störung und deren Behebung an der Zopfwinde.
Auf diese Weise kann auf recht aufwendige Verfahren zur Erfassung der Zusammensetzung und Gestalt des Zopfes als Basis für die Steuerung verzichtet werden.

Je nach Art des Stofflösers oder der Zopfwinde sowie dem Anfall an Verschmutzungen kann es vorteilhaft sein, den Zopf kontinuierlich oder aber diskontinuierlich, vorzugsweise taktweise aus dem Stofflöser zu fördern.

Kommt es zu einer Störung, so äußert sich dies in der Regel durch eine Abweichung der Bewegungsgeschwindigkeit des Zopfes von einem Sollwert. Daher sollte die Anpresskraft der Rollen vermindert werden, wenn die Bewegungsgeschwindigkeit des Zopfes einen Sollwert unterschreitet, insbesondere wenn sich der Zopf entgegen dem Sollwert nicht bewegt.

Die meisten Störungen werden durch eine Verdickung des Zopfes verursacht, welche nur schwer oder gar nicht durch den von den Rollen der Zopfwinde gebildeten Pressspalt gelangt.
Um das Passieren dieser Verdickung zu ermöglichen bzw. zu unterstützen können verschiedene Steuerungsvarianten zur Anwendung gelangen.

So kann es von Vorteil sein, wenn die Anpresskraft bereits nach Unterschreiten des Sollwertes oder erst bei einem vom Sollwert abweichenden Stillstand über eine bestimmte Zeitspanne vermindert wird.

Üblicherweise reichen für eine Verminderung Zeitspannen im Bereich zwischen 1 und 10s aus. Sollte die Störung danach immer noch nicht behoben sein, so wird ein Störungsalarm ausgegeben und/oder die Anpresskraft noch weiter reduziert.

Bei den Untersuchungen hat es sich gezeigt, dass es meist genügt, wenn die Anpresskraft um einen bestimmten Betrag, vorzugsweise um 50-100% vermindert wird.
Dabei kann die Anpresskraft kontinuierlich oder aber auch diskontinuierlich vermindert werden, bis die Bewegungsgeschwindigkeit des Zopfes einen Sollwert erreicht. Anschließend kann die Anpreßkraft wieder auf ihren Normalwert angehoben werden.

Falls der Zopfdurchmesser zu klein ist oder die Anpresskraft zu stark reduziert wurde, so kann es passieren, dass der Zopf im Pressspalt nicht ausreichend fixiert wird und zurück in den Stofflöser rutscht.

Um dem entgegen zu wirken, sollte die Anpresskraft erhöht werden, wenn sich der Zopf entgegen der Sollrichtung bewegt.

Hinsichtlich der Erfassung der Bewegung des Zopfes gibt es unterschiedliche Möglichkeiten. In den gegenwärtig dominierende Fällen, bei denen nur eine der beiden den Pressspalt für den Zopf bildenden Rollen angetrieben ist, kann die Rotation der nicht angetriebenen Rolle zur Erfassung der Bewegung des Zopfes für die Steuerung der Anpresskraft genutzt werden. Dies ist nicht nur sicher sondern auch einfach.

Nachfolgend soll die Erfindung an einem Ausführungsbeispiel näher erläutert werden. In der beigefügten Zeichnung zeigt:
Figur 1: eine schematische Darstellung eines Stofflösers 2 mit Zopfwinde 3 und
Figur 2: einen schematische Querschnitt durch eine Zopfwinde 3.

Der Stofflöser 2 besteht im Wesentlichen aus einem nach oben offen Behälter mit einem am Boden befindlichen Rotor 9. In den Stofflöser 2 werden Faserstoffe, insbesondere Altpapier eingebracht, die unter Zugabe von Wasser aufgelöst werden. Die dabei entstehende Suspension wird anschließend aufbereitet und in einer folgenden Maschine zur Herstellung einer Papier-, Karton-, Tissue- oder einer anderen Faserstoffbahn benutzt.

Mit dem Altpapier gelangen auch Verschmutzungen in den Stofflöser 2. Schwerschmutz wie Steine, Metallteile und dgl. sinken in einen eigens dafür vorgesehenen Auffangraum am Boden und werden von dort von Zeit zu Zeit ausgeschleust.
Fremdbestandteile wie Ballendrähte, Gewebestücke, Folienstücke, Schnüre und dgl. verspinnen sich im Stofflöser 2 zu einem Zopf 1, der langsam aus dem Stofflöser 2 abgezogen wird und sich durch die Anlagerung von neuen zopfbildenden Fremdbestandteilen verlängert.

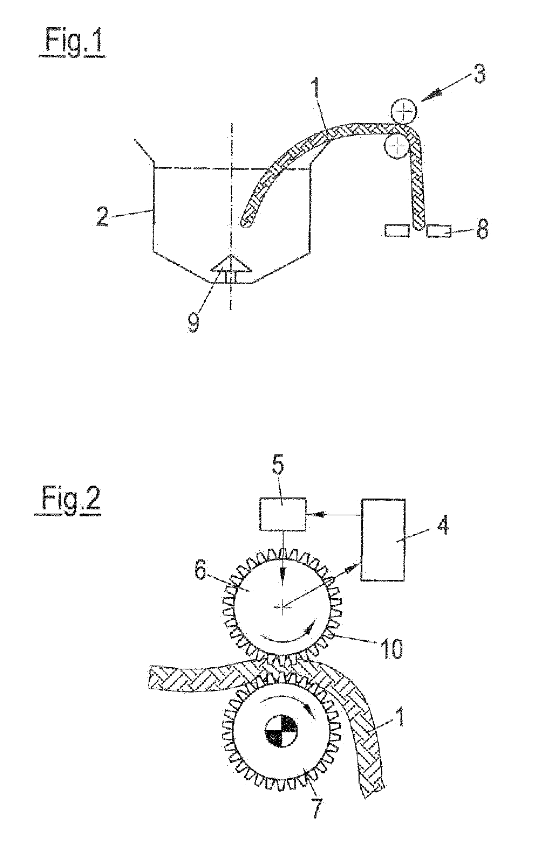

Der Zopf 1 wird dabei gemäß Figur 1 von einer Zopfwinde 3 in den Maschinenkeller gefördert, wo der Zopf 1 von einer Trenneinrichtung 8 in einzelne Stücke zerschnitten wird.

Die in Figur 2 dargestellte Zopfwinde 3 wird von zwei gegeneinander gepressten Rollen 6,7 gebildet. Während die untere Rolle 7 angetrieben wird, ist die gegenüberliegende obere Rolle 6 ohne Antrieb.
Der Anpressdruck im Pressspalt zwischen den Rollen 6,7 wird über eine Anpresseinheit 5 erzeugt, welche auf die nicht angetriebene Rolle 6 einwirkt und diese gegen die andere Rolle 7 drückt.

Um den Transport des Zopfes 1 durch den Pressspalt zwischen den Rollen 6,7 zu unterstützen, ist deren Mantelfläche profiliert ausgebildet. Hierzu kann der Mantel der Rollen 6,7 Zähne 10 oder axial verlaufende Rillen besitzen.

Die Zähne 10 greifen dabei in den Zopf 1 ein und befördern ihn durch den Pressspalt. Gleichzeitig ermöglicht die Profilierung der Mäntel der Rollen 6,7 die Übertragung der Antriebsleistung von der angetriebenen Rolle 7 über den Zopf 1 auf die gegenüberliege Rolle 6, so dass sich auch diese dreht.

Der Zopf 1 ist über seine Länge unterschiedlich aufgebaut und gestaltet. Ist der Anpressdruck im Pressspalt nicht ausreichend hoch, so kann der Zopf 1 zurück in den Stofflöser 2 rutschen.
Andererseits kann der Zopf 1 auch eine Verdickung aufweisen, die nur schwer oder nicht durch den Pressspalt gefördert werden kann.

Bei einer Verdickung des Zopfes 1 bewegt sich die nicht angetriebene Rolle 6 langsamer oder gar nicht.

Daher kann über die von einem Drehsensor überwachte Bewegung der nicht angetriebenen Rolle 6 auf den Zustand im Bereich der Zopfwinde 3 geschlossen werden.

Unterschreitet die Drehzahl der nicht angetriebenen Rolle 6 einen von der Bewegung der angetriebenen Rolle 7 abhängigen Sollwert, so wird die Anpresskraft der Anpresseinheit 5 von einer Steuereinheit 4 reduziert.
Der Sollwert hängt auch davon ab, ob die Förderung des Zopfes 1 und damit der Antrieb der Rolle 7 kontinuierlich oder diskontinuierlich erfolgt.

Um die Schwankungen zu minimieren, kann die Verminderung der Anpresskraft aber ebenso erst bei Stillstand der nicht angetriebenen Rolle 6 erfolgen.

Dabei wird die Anpresskraft im Pressspalt in Stufen oder kontinuierlich so weit vermindert, bis sich die Verdickung durch den Pressspalt bewegt und die Bewegung der nicht angetriebenen Rolle 6 einen Sollwert erreicht. Durch die Verminderung der Anpresskraft kommt es zu einer Aufweitung des Pressspaltes, was die Passage des Zopfes 1 erleichtert. Die Verminderung der Anpresskraft kann auch auf eine bestimmte Zeit und/oder einen bestimmten Differenzbetrag begrenzt sein.

Nach der Störung kann die Anpresskraft kontinuierlich oder diskontinuierlich bis zum Normalwert angehoben werden.
Die erfindungsgemäße Steuerung ist nicht nur einfach und sicher sondern auch sehr effizient.

## Patentansprüche

1. Verfahren zur Steuerung einer Zopfwinde (3), welche einen von Verunreinigungen gebildeten Zopf (1) aus einem Stofflöser (2) zur Auflösung von mit Verunreinigungen versetzten Faserstoffen fördert und von wenigstens zwei gegeneinander gedrückten Rollen (6,7) gebildet wird, durch deren Pressspalt der Zopf (1) läuft, **dadurch gekennzeichnet, dass** die Anpresskraft der Rollen (6,7) in Abhängigkeit von der Bewegung des Zopfes (1) gesteuert wird.

2. Verfahren nach Anspruch 1, **dadurch gekennzeichnet, dass** der Zopf (1) kontinuierlich gefördert wird.

3. Verfahren nach Anspruch 1, **dadurch gekennzeichnet, dass** der Zopf (1) diskontinuierlich, vorzugsweise taktweise gefördert wird.

4. Verfahren nach einem der vorhergehenden Ansprüche, **dadurch gekennzeichnet, dass** die Anpresskraft der Rollen (6,7) vermindert wird, wenn die Bewegungsgeschwindigkeit des Zopfes (1) einen Sollwert unterschreitet, insbesondere wenn sich der Zopf (1) entgegen dem Sollwert nicht bewegt.

5. Verfahren nach Anspruch 4, **dadurch gekennzeichnet, dass** die Anpresskraft nach Unterschreiten des Sollwertes über eine bestimmte Zeitspanne vermindert wird.

6. Verfahren nach Anspruch 4, **dadurch gekennzeichnet, dass** die Anpresskraft bei einem vom Sollwert abweichenden Stillstand über eine bestimmte Zeitspanne vermindert wird.

7. Verfahren nach einem der Ansprüche 4 bis 6, **dadurch gekennzeichnet, dass** die Anpresskraft um einen bestimmten Betrag, vorzugsweise um 50 - 100% vermindert wird.

8. Verfahren nach einem der Ansprüche 4 bis 6, **dadurch gekennzeichnet, dass** die Anpresskraft kontinuierlich vermindert wird, bis die Bewegungsgeschwindigkeit des Zopfes (1) einen Sollwert erreicht.

9. Verfahren nach einem der Ansprüche 4 bis 6, **dadurch gekennzeichnet, dass** die Anpresskraft diskontinuierlich vermindert wird, bis die Bewegungsgeschwindigkeit des Zopfes (1) einen Sollwert erreicht.

10. Verfahren nach einem der vorhergehenden Ansprüche, **dadurch gekennzeichnet, dass** nur eine der beiden den Pressspalt für den Zopf (1) bildenden Rollen (6,7) angetrieben ist und die Rotation der nicht angetriebenen Rolle (6) zur Erfassung der Bewegung des Zopfes (1) für die Steuerung der Anpresskraft genutzt wird.

## Claims

1. Method for controlling a rope winch (3), which conveys a rope (1) formed from contaminants out of a pulper (2) for pulping fibrous materials mixed with contaminants and is formed by at least two rollers (6, 7) pressed against each other, through the nip of which the rope (1) runs,
**characterized in that**
the pressing force of the rollers (6, 7) is controlled on the basis of the movement of the rope (1).

2. Method according to Claim 1,
**characterized in that**
the rope (1) is conveyed continuously.

3. Method according to Claim 1,
**characterized in that**
the rope (1) is conveyed discontinuously, preferably cyclically.

4. Method according to one of the preceding claims,
**characterized in that**
the pressing force of the rollers (6, 7) is reduced if the speed of movement of the rope (1) falls below a desired value, in particular if the rope (1) does not move towards the desired value.

5. Method according to Claim 4,
**characterized in that**
after falling below the desired value over a specific time period, the pressing force is reduced.

6. Method according to Claim 4,
**characterized in that**
in the event of a standstill differing from the desired value over a specific time period, the pressing force is reduced.

7. Method according to one of Claims 4 to 6,
**characterized in that**
the pressing force is reduced by a specific amount, preferably by 50 - 100%.

8. Method according to one of Claims 4 to 6,
**characterized in that**
the pressing force is reduced continuously until the speed of movement of the rope (1) reaches a desired value.

9. Method according to one of Claims 4 to 6,
**characterized in that**
the pressing force is reduced discontinuously until the speed of movement of the rope (1) reaches a desired value.

10. Method according to one of the preceding claims,
**characterized in that**
only one of the two rollers (6, 7) forming the nip for the rope (1) is driven, and the rotation of the non-driven roller (6) is used to measure the movement of the rope (1) for the control of the pressing force.

## Revendications

1. Elément endoprothétique (1, 2), qui est formé à partir d'un matériau céramique (9) et dans lequel le matériau céramique (9) est partiellement revêtu d'un alliage de titane, dans lequel une partie de surface non revêtue est destinée à coopérer comme face de glissement (3) avec un autre élément prothétique (1, 2), et dans lequel une partie de surface revêtue (13) est destinée à un assemblage avec un os (6, 7), **caractérisé en ce que** la partie du matériau céramique (9) formant une face limite (8) vers le revêtement présente une rugosité Rₐ comprise entre 2,5 µm et 7 µm, de préférence entre 3,5 µm et 5 µm.

2. Elément endoprothétique selon la revendication 1, **caractérisé en ce que** la résistance à la traction d'éléments adhérents entre le revêtement (10) et le matériau céramique (9) est supérieure à 25 MPa, de préférence supérieure à 30 MPa, de préférence encore supérieure à 40 MPa.

3. Elément endoprothétique selon la revendication 1 ou 2, **caractérisé en ce que** la surface du revêtement (10) présente une rugosité Rₐ comprise entre 15 µm et 35 µm, de préférence entre 20 µm et 30 µm.

4. Elément endoprothétique selon l'une quelconque des revendications 1 à 3, **caractérisé en ce que** l'épaisseur de couche du revêtement (10) se situe entre 100 µm et 250 µm, de préférence entre 150 µm et 200 µm.

5. Elément endoprothétique selon l'une quelconque des revendications 1 à 4, **caractérisé en ce que** la proportion de pores du revêtement (10) se situe entre 20 % et 40 %.

6. Elément endoprothétique selon l'une quelconque des revendications 1 à 5, **caractérisé en ce que** la largeur des pores du revêtement (10) se situe entre 30 µm et 70 µm, de préférence entre 40 µm et 60 µm.

7. Elément endoprothétique selon l'une quelconque des revendications 1 à 6, **caractérisé en ce que** le matériau céramique (9) comprend de l'oxyde de zirconium et/ou de l'oxyde d'aluminium.

8. Elément endoprothétique selon l'une quelconque des revendications 1 à 7, **caractérisé en ce que** la partie de la surface céramique configurée en face de glissement est destinée à former une face de glissement (3) d'une prothèse de disque intervertébral.

9. Procédé de fabrication d'un élément endoprothétique selon l'une quelconque des revendications 1 à 8, comportant les étapes suivantes:
a. sélectionner un composant céramique configuré en élément endoprothétique, dans lequel une surface à revêtir présente une rugosité Rₐ comprise entre 2,5 µm et 7 µm, de préférence entre 3,5 µm et 5 µm.
b. déposer un alliage de titane sur la surface à revêtir par projection au plasma.

10. Procédé selon la revendication 9, **caractérisé en ce que** le revêtement est déposé en une seule opération.
